Europäisches Patentamt

European Patent Office

Office européen des brevets

(11) Numéro de publication: **0 305 249 B1**

(12) **FASCICULE DE BREVET EUROPEEN**

(45) Date de publication de fascicule du brevet: **09.06.93** (51) Int. Cl.5: **C03C 25/02**, C08G 12/42, C08G 12/38, C08L 61/20

(21) Numéro de dépôt: **88401998.5**

(22) Date de dépôt: **01.08.88**

(54) **Composition d'encollage de fibres minérales discontinues pour l'obtention de produits d'isolation.**

(30) Priorité: **03.08.87 FR 8710978**

(43) Date de publication de la demande:
**01.03.89 Bulletin 89/09**

(45) Mention de la délivrance du brevet:
**09.06.93 Bulletin 93/23**

(84) Etats contractants désignés:
**AT BE CH DE ES GB IT LI LU NL SE**

(56) Documents cités:
**EP-A- 0 219 427**
**GB-A- 1 155 004**
**US-A- 2 564 925**
**US-A- 4 461 804**

(73) Titulaire: **ISOVER SAINT-GOBAIN**
**Les Miroirs 18, avenue d'Alsace**
**F-92400 Courbevoie(FR)**

(72) Inventeur: **Tetart, Serge**
**15 Rue du Docteur Roux**
**F-60100 Nogent sur Oise(FR)**
Inventeur: **Lericque, Bernard**
**23 Rue Raymond Maillet**
**Monchy Saint-Eloi F-60290 Rantigny(FR)**

(74) Mandataire: **Luziau, Nelly et al**
**Saint Gobain Recherche 39, Ouai Lucien Le-franc**
**F-93304 Aubervilliers Cédex (FR)**

Rank Xerox (UK) Business Services
(3. 10 / 3.6 / 3.3. 1)

## Description

La présente invention est relative à une composition d'encollage de fibres minérales discontinues, notamment de fibres de verre.

Elle est aussi relative aux produits d'isolation, traités par cette composition, qui présentent en particulier une couleur blanche, et qui sont utiles notamment sous forme de coquilles pour isolation de tuyauteries, de matelas pour la confection de produits moulés.

Les produits pour l'isolation à base de fibres minérales peuvent être formés à partir de fibres obtenues par différents procédés. On peut citer par exemple la technique connue de l'étirage centrifuge, dans laquelle la matière en fusion est introduite dans un centrifugeur comprenant une multitude de petits orifices, projetée, sous l'action de la force centrifuge, vers la paroi périphérique du centrifugeur et s'en échappe par les orifices sous forme de filaments. Ceux-ci, à la sortie du centrifugeur, sont étirés et entrainés vers un organe récepteur par un courant gazeux ayant une vitesse et une température élevées. Pour assurer l'assemblage des fibres entre elles pour obtenir un matelas d'isolation, les fibres sont traitées par une composition, dite d'encollage, qui contient une résine thermodurcissable. Le matelas de fibres traitées est ensuite soumis à un traitement thermique en étuve pour polymériser la résine et obtenir un produit pour l'isolation présentant des propriétés désirées, telles que résilience, stabilité dimensionnelle, résistance à la traction, reprise d'épaisseur après compression, couleur homogène.

Les compositions d'encollage comprennent généralement une résine thermodurcissable. Cependant, des compositions d'encollage, ne contenant qu'une résine thermodurcissable, formeraient des produits de couleur non homogène, plus coûteux et rendraient le procédé de fabrication plus polluant. Aussi, les compositions d'encollage habituellement utilisées comprennent une composition aqueuse de résine agissant comme liant principal et des additifs d'encollage conférant au produit final des propriétés appropriées et satisfaisant aux contraintes inhérentes au procédé de fabrication du produit (application, polymérisation). La résine est généralement constituée par des résines phénoplastes (phénol-formol) ou aminoplastes (mélamine-formol).

Le traitement des fibres par la composition d'encollage peut être effectué de différentes façons. On peut, par exemple, d'abord rassembler les fibres sur l'organe récepteur, tel qu'un convoyeur, les comprimer en un matelas et les tremper ensuite dans une solution aqueuse contenant des résines phénoplastes ou aminoplastes, ou des mélanges des deux. Mais, il est nécessaire d'éliminer l'eau. Le traitement thermique ultérieur sert donc à éliminer l'eau et à polymériser les résines, ce qui conduit à des dépenses énergétiques supplémentaires.

Aussi, traite-t-on, de préférence, les fibres, à leur sortie de l'organe d'étirage, en les pulvérisant d'une composition aqueuse d'encollage. L'eau est alors partiellement évaporée et le traitement thermique ultérieur sert essentiellement au séchage final et à la polymérisation des résines et à la mise en forme du matelas de fibres liées.

Pour un tel traitement par pulvérisation, on doit utiliser une composition d'encollage facilement pulvérisable sur les fibres. Pour cela, le constituant essentiel de la composition d'encollage, c'est-à-dire la résine thermodurcissable, doit présenter, outre une bonne stabilité dans le temps, une diluabilité à l'eau élevée. Cette forte diluabilité confère aussi à la résine une temps de gélification approprié pour éviter une polymérisation trop rapide et permettre une répartition homogène sur les fibres et, par suite, un encollage plus uniforme des fibres. La diluabilité à l'eau d'une solution aqueuse de résine correspond au volume d'eau désionisée que l'on peut, à une température donnée, ajouter à l'unité de volume de cette solution avant de provoquer la formation d'un trouble permanent.

Pour obtenir des compositions d'encollage facilement pulvérisables sur les fibres minérales, on a pensé à utiliser des résines du type mélamine-urée-formaldéhyde, qui résultent d'une réaction de condensation, en milieu basique, de formaldéhyde, d'urée, puis de mélamine, en présence d'un polyol de fonctionnalité au moins égale à trois. Ces résines décrites dans la publication EP-A-0 219 427 sont stables dans le temps et présentent une diluabilité au moins égale à 1000 %. Les compositions d'encollage contenant ces résines se pulvérisent facilement sur les fibres minérales, ont un temps de gélification approprié et permettent de former des produits d'isolation ayant une bonne tenue à la chaleur et présentant une couleur blanche.

Bien que ces compositions d'encollage permettent d'obtenir des produits d'isolation présentant des propriétés améliorées comme indiquées dans l'EP-A-0 219 427, elles présentent encore certains inconvénients. Tout d'abord, elles contiennent une résine particulière (mélamine-urée-formaldéhyde préparée en présence de polyol) dont la fabrication est plus coûteuse que celle des autres résines du même type. D'autre part, les fibres, après étirage et traitement par la composition d'encollage, sont recueillies sur un organe récepteur où elles forment un matelas pouvant présenter un caractère collant qui empêche un regonflement suffisant du matelas avant le traitement thermique pour la polymérisation de la résine. Ce regonflement insuffisant avant polymérisation (prégélification), ne permet pas d'obtenir un produit ayant une bonne reprise d'épaisseur après la compression nécessaire pour un stockage et un transport économiques des produits. En outre, on cherche à obtenir des produits ayant des propriétés mécaniques améliorées, notamment la résistance à la traction.

Le document US-A-4 461 804 concerne la formation de produits non tissés, du type papier, à partir d'une dispersion aqueuse de fibres minérales. Le problème abordé et résolu par ce document est la difficulté de disperser les fibres dans l'eau sans agglomération de fibres. Ce problème de dispersion n'est pas posé dans la technique des produits d'isolation selon l'invention.

La présente invention a pour objet une composition d'encollage ne présentant pas les inconvénients précités et permettant d'obtenir un produit d'isolation de propriétés améliorées.

La composition aqueuse basique pour l'encollage de fibres minérales discontinues, notamment de fibres de verre, comprend, selon l'invention, une résine thermodurcissable, de l'urée, éventuellement un ou plusieurs additifs d'encollage et, comme composé supplémentaire d'encollage, un composé polyméthylolé de fonctionnalité au moins égale à trois.

Le polyol utilisé dans l'invention est du type
$R\text{-}C(CH_2OH)_3$ ou
$R\text{-}C(CH_2OH)_2 \text{-} CH_2\text{-}O\text{-}CH_2\text{-}(CH_2OH)_2\text{-}C\text{-}R'$ où R et R', identiques ou différents, représentent un radical aliphatique hydrocarboné comportant ou non un groupe hydroxyle.

Le polyol est de préférence choisi dans le groupe formé par le pentaérythritol, le dipentaérythritol, le triméthylolpropane et le ditriméthylolpropane.

Les résines utilisables dans les compositions d'encollage selon l'invention peuvent être toutes résines thermodurcissables appropriées, particulièrement des résines phénoliques modifiées ou non par de l'urée et des résines aminoplastes modifiées ou non par de l'urée ou des mélanges de ces résines.

Les résines utilisées de préférence dans l'invention sont des résines du type mélamine-urée formaldéhyde présentant une diluabilité à l'eau élevée.

Des résines ayant cette caractéristique sont, par exemple, celles mentionnées précédemment, qui résultent d'une réaction de condensation, en milieu basique, de formaldéhyde, d'urée, puis de mélamine, en présence d'un polyol de fonctionnalité au moins égale à trois, tel que celui décrit précédemment (résine appelée dans la présente description, "résine A"). Des résines appropriées sont celles dans lesquelles les rapports molaires

$$\frac{F}{M} \text{ et } \frac{U}{M}$$

du nombre de moles de formaldéhyde (F) et d'urée (U) rapporté au nombre de moles de mélamine (M) sont, pour

$$\frac{F}{M}, \text{ de } \left(0,5\frac{U}{M} + 1,5\right) \text{ à } \left(3\frac{U}{M} + 3\right) \text{ et, pour } \frac{U}{M},$$

de 0,5 à 5.

Dans ces résines, le polyol est présent à raison de 0,2 à 2 moles, et de préférence de 0,25 à 0,5 moles, par mole de mélamine. Pour préparer ces résines, on peut, par exemple, mettre en présence, dans une première phase, à 40°C environ, une solution aqueuse de formaldéhyde et le polyol, puis ajouter un catalyseur basique tel que la soude. On ajoute alors l'urée afin de former une résine intermédiaire, on porte le mélange réactionnel à 80°C environ, puis on ajoute à nouveau du catalyseur basique, puis la mélamine. On maintient la température à 80°C environ pour poursuivre la réaction de condensation avec la mélamine, tout en conservant une diluabilité à l'eau quasi infinie. On refroidit alors à 30°C environ et on ajuste, le cas échéant, le pH du mélange à une valeur de 9 environ. Les résines obtenues sont stables au stockage et présentent une diluabilité à l'eau au moins égale à 1000 %.

D'autres résines utilisables pour la réalisation de l'invention sont des résines formaldéhyde-mélamine-urée (appelées dans la présente description "résine B"), préparées sans polyol. Ces résines peuvent peuvent avoir les mêmes rapports molaires

$$\underline{F} \text{ et } \underline{U}$$
$$M \qquad M$$

que précédemment, mais être préparées par un procédé différent. Un des procédés consiste à introduire une solution aqueuse de formaldéhyde dans un réacteur, à 40°C environ, à ajouter le catalyseur basique, tel que la soude, puis à introduire la mélamine ; le rapport molaire formaldéhyde/mélamine

$$\frac{(\underline{F})}{M}$$

initial est de préférence de 2,5 à 3,5. On augmente alors la température jusqu'à 70°C environ, on peut introduire à nouveau de la soude, puis l'urée. On augmente la température pour qu'elle atteigne 80°C environ, on la maintient à cette température pour poursuivre la réaction, puis on refroidit et on ajuste le pH à 9 environ. Cette résine présente une diluabilité à l'eau au moins égale à 1000 %.

La composition d'encollage selon l'invention peut contenir d'autres constituants usuels.

Ainsi, elle peut contenir des résines phénoliques thermodurcissables du type résol, qui sont connus pour polymériser rapidement à haute température sans l'apparition de phénomènes indésirables de prégélification.

Les compositions d'encollage contiennent généralement de l'urée qui sert, notamment, à diminuer le taux de formaldéhyde libre et qui agit aussi comme liant.

Les compositions d'encollage peuvent aussi contenir un ou plusieurs adjuvants usuels d'encollage. Ces adjuvants sont par exemple de l'huile qui joue le rôle d'adoucissant et d'antipoussière en évitant que les fibres minérales s'envolent sous forme de poussières ; de l'ammoniaque pour éviter la prégélification de la résine dans la zone de formation des fibres ; un catalyseur de polymérisation de la résine dans l'étuve, en général du sulfate d'ammonium ; du silane qui joue le rôle d'agent de pontage entre la résine et les fibres et assure un meilleur comportement après vieillissement des produits le contenant. Les compositions d'encollage peuvent aussi contenir, si nécessaire, des colorants, charges et autres agents chimiques tels que la silicone pour rendre hydrophobes les produits.

Certains des composants autres que la résine peuvent ne pas être utilisés pour adapter l'encollage à une production particulière ou pour obtenir des propriétés spécifiques. Ainsi, dans le cas où la composition d'encollage doit être appliquée sur des produits devant présenter une bonne tenue au feu, on n'utilise peu ou pas d'huile.

Les compositions d'encollage sont des compositions aqueuses contenant de 1 à 25 % d'extrait sec, et de préférence au moins 10%.

Les compositions d'encollage, selon l'invention, comprennent de préférence, pour 100 parties pondérales de matière sèche, de 70 à 90 parties de résine, de 10 à 30 parties d'urée et de 3 à 15 parties de polyol.

On peut ajouter différents additifs d'encollage aux compositions selon l'invention. Les quantités sont, pour 100 parties pondérales de matière sèche de résine, d'urée et de polyol :
- de 0 à 20 parties d'huile, généralement de 6 à 15 parties
- de 0 à 20 parties d'ammoniaque à 20 % , et de préférence de 3 à 12 parties,
- de 0 à 5 parties de sulfate d'ammonium et de préférence de 1 à 3 parties et,
- de 0 à 2 parties de silane, de préférence de 0,1 à 0,8 parties.

La présente invention concerne aussi un procédé de fabrication d'un produit d'isolation à base de fibres minérales discontinues, particulièrement de fibres de verre, selon lequel on forme des filaments, on les traite par une composition d'encollage, selon l'invention, qui contient une résine thermodurcissable, avant qu'elles n'atteignent un organe récepteur où elles forment un matelas, puis on soumet le matelas de fibres à un traitement thermique pour polymériser la résine.

Pour former ces filaments, on peut utiliser par exemple le procédé décrit précédemment dans lequel la matière en fusion est introduite dans un centrifugeur et étirée, à la sortie du centrifugeur, par un courant gazeux à vitesse et température élevées.

L'invention a aussi pour but des produits pour isolation. Ces produits peuvent avoir toute couleur selon l'utilisation ultérieure envisagée ; dans ce cas, la composition d'encollage contient un ou des colorants appropriés. Les produits d'isolation traités par une composition d'encollage selon l'invention ne contenant pas de résine phénolique et de colorant, sont blancs et sont particulièrement recherchés car ils peuvent

4

trouver des applications variées ; on peut citer, par exemple, des panneaux isolants pour plafonds : ces produits consistent en la superposition d'un panneau de fibres minérales encollées, d'un voile de fibres de verre et d'une simple couche de peinture blanche conférant au produit son aspect esthétique final.

Les produits traités par la composition d'encollage selon l'invention présentent aussi une bonne tenue à la chaleur, ce qui les rend utilisables pour l'isolation thermique de tuyaux destinés à véhiculer des fluides portés à haute température, de l'ordre de 400°C.

Pour mieux apprécier les effets de la composition d'encollage selon l'invention sur les produits finis obtenus, on a étudié certaines caractéristiques des matelas de fibres de verre imprégnés de compositions d'encollage contenant et ne contenant pas de polyol défini précédemment.

De nombreux paramètres interviennent dans les propriétés des matelas de fibres pour isolation.

Notons, particulièrement, la finesse des fibres, le taux de liant évalué en pourcentage du poids total de fibres encollées, la couleur, la résistance à la traction, la reprise d'épaisseur après une compression déterminée et la densité.

La finesse des fibres est appréciée par une mesure dite du micronaire, définie par la norme ASTMD 1448-78. Le micronaire est déterminé de la façon suivante : un échantillon de produit, habituellement 5 g, est placé dans un compartiment traversé par un courant gazeux émis dans des conditions déterminées, notamment de pression. Les fibres soumises à ce courant forment un obstacle qui tend à freiner le passage de ce gaz. La mesure du débit gazeux est relevée sur un débit-mètre gradué. Ce sont ces valeurs définies pour des conditions normalisées qui sont relevées. Plus les fibres sont fines pour un même poids d'échantillon, plus le débit est faible. Le micronaire est donné en F/5 g.

La résistance à la traction est mesurée suivant la norme ASTM-C-681-76. Suivant cette norme, des anneaux de dimensions bien définies sont découpés dans le matelas de fibres. Ces anneaux sont placés sur deux barres cylindriques de traction. Ils sont soumis à des forces croissantes. On mesure la force exercée à la rupture. Pour obtenir des résultats comparables, la force exercée est rapportée au poids de l'échantillon. Les résultats sont exprimés en gf/g. On mesure généralement la résistance à la traction après fabrication du matelas de fibres et après vieillissement. Ce dernier est simulé en soumettant l'échantillon à l'action de la vapeur l'eau sous pression, pendant 30 mn dans un autoclave à 107°C.

Les mesures de reprise d'épaisseur (RE) se font suivant la norme DIN 18165. Dans l'étuve, où a lieu la polymérisation de la résine, le matelas de fibres minérales est placé entre deux conformateurs qui lui imposent une épaisseur donnée, supérieure à l'épaisseur nominale, ou épaisseur minimale garantie à l'utilisateur. A la sortie de l'étuve, le matelas est comprimé, pendant une durée déterminée, par exemple jusqu'au 1/7ème de son épaisseur nominale. On mesure l'épaisseur retrouvée après décompression. La mesure s'effectue sans secouage du matelas de fibres. Ces mesures sont exprimées en pourcentage de l'épaisseur nominale.

Les exemples qui vont suivre sont donnés à titre indicatif, pour illustrer l'invention.

EXEMPLE 1

On prépare une composition aqueuse d'encollage à 2 % de matière sèche, en mélangeant une composition aqueuse de résine formaldéhyde-mélamine-urée (Résine B), de l'urée et du pentaérythritol comme polyol. La résine est une résine B obtenue comme indiqué précédemment, les rapports molaires

$$\frac{F}{M} \text{ et } \frac{U}{M}$$

étant de 2,9 et 2,1 respectivement et la quantité totale de catalyseur basique, la soude, introduite en plusieurs fois, représente 1 % de la masse de mélamine.

Ces constituants sont utilisés dans des proportions , exprimées en parties pondérales de matière sèche, de 74 parties de résine, 13 parties d'urée et 13 parties de pentaérythritol.

On pulvérise cette composition aqueuse sur des fibres de verre obtenues par le procédé connu d'étirage centrifuge, avant qu'elles n'atteignent l'organe récepteur. L'eau contenue dans la composition est en grande partie évaporée du fait de la température élevée. Les fibres traitées forment un matelas sur l'organe récepteur. Ce matelas est coupé en panneaux carrés de 550 nm de côté. On les soumet à un traitement thermique, en étuve, à 200°C pendant 4 mn environ pour polymériser la résine. Le produit obtenu présente une couleur blanche.

On le soumet à un test de résistance à la traction, tel que défini précédemment, après fabrication et après vieillissement en autoclave.

Les mesures de résistance à la traction, ainsi que la densité, le taux de liant et la finesse des fibres, sont indiqués au tableau 1.

La différence élevée entre les valeurs de la résistance à la traction après fabrication et après vieillissement est due au fait que la composition d'encollage ne contient pas de silane. On a volontairement préparé une composition d'encollage sans silane, composé connu pour maintenir de bonnes propriétés après le viellissement en conditions humides, afin d'augmenter l'effet du vieillissement en autoclave.

EXEMPLE 2

On opère comme à l'exemple 1, mais la composition d'encollage ne contient pas de polyol.

Les résultats des mesures de résistance à la traction sont donnés au tableau 1.

En observant les résultats obtenus dans ces deux exemples, on note que le produit traité par une composition d'encollage selon l'invention, c'est-à-dire contenant un polyol (exemple 1) présente une résistance à la traction améliorée après fabrication et après vieillissement en autoclave.

EXEMPLE 3

On prépare une composition aqueuse d'encollage à 10 % de matière sèche à partir de 80 parties de résine formaldéhyde-mélamine-urée (résine B décrite à l'exemple 1), 10 parties d'urée et 10 parties de pentaérythritol, ces quantités étant exprimées en parties pondérales de matière sèche.

La composition contient en outre, pour 100 parties de matière sèche de résine et d'urée, 0,5 partie de silane, tel que l'aminosilane A 1100 de la société Union Carbide et 6 parties d'huile minérale "Mulrex 91" de la société Mobil Oil.

On pulvérise la composition aqueuse d'encollage sur des fibres de verre, comme précédemment décrit.

On soumet le matelas de fibres obtenu à un traitement thermique, à 200°C, en étuve tunnel pour polymériser la résine en continu. On obtient un produit blanc.

Le matelas subit ensuite le test de résistance à la traction, après formation et après vieillissement simulé en conditions humides. Le matelas est aussi soumis au test de reprise d'épaisseur. Le taux de compression est de 7/1. Les mesures de reprise d'épaisseur sont faites après 24 h et 3 mois de compression. Les résultats des mesures, ainsi que la densité, le taux de liant, la finesse des fibres, sont indiqués au tableau 2.

EXEMPLE 4

On opère comme à l'exemple 3, mais la composition d'encollage contient, en parties pondérales de matière sèche, 85 parties de résine B, 10 parties d'urée et 5 parties de pentaérythritol.

Les résultats des mesures sont indiqués au tableau 2.

En étudiant les résultats portés au tableau 2, on peut constater qu'en comparant deux compositions d'encollage selon l'invention (exemples 3 et 4) contenant la même résine B, la composition, qui comprend une quantité plus élevée de polyol (exemple 3), permet d'obtenir des produits présentant de meilleures résistance à la traction et reprise d'épaisseur.

EXEMPLE 5

On opère comme à l'exemple 3, mais on utilise, comme résine, une résine de formaldéhyde-urée-mélamine (résine A) préparée comme indiqué précédemment en présence de polyol (0,54 mole de pentaérythritol diqué précédemment en présence de polyol (0,54 mole de pentaérythritol par mole de mélamine, rapports molaires

$$\underline{F} = 6,5 \text{ et } \underline{U} = 2 \text{ et}$$
$$\overline{M} \qquad \overline{M}$$

soude : 32,2 moles par mole de mélamine).

La composition d'encollage contient, en parties pondérales de matière sèche, 76,2 parties de résine A, 19 parties d'urée et 4,8 parties de pentaérythritol. La finesse des fibres est de 2,9 F/5 g. Le produit obtenu présente une couleur blanche, a une densité de 6 kg/m$^3$, un taux de liant de 5,2 %. La résistance à la traction après fabrication est de 170 gf/g ; celle, mesurée après vieillissement en autoclave, est de 85 gf/g.

EXEMPLE 6 (comparatif)

On opère comme à l'exemple 5, mais la composition d'encollage contient, en parties pondérales de matière sèche, 80 parties de résine (A), 20 parties d'urée et pas de pentaérythritol.

La finesse des fibres est de 2,9 F/5 g. Le produit obtenu est de couleur blanche, a une densité de 6 kg/m$^3$, un taux de liant de 5,0 %. Les résistances à la traction après gélification et après vieillissement en autoclave sont, respectivement, de 166 gf/g et 70 gf/g.

En comparant les résultats des exemples 5 et 6, on peut voir que la composition d'encollage de l'exemple 5, qui contient du polyol, permet de fabriquer un produit ayant une meilleure résistance à la traction que celui traité par la composition d'encollage de l'exemple 6 (non conforme à l'invention), qui ne contient pas de polyol.

TABLEAU 1

| | Exemple 1 | Exemple 2 |
|---|---|---|
| Composition d'encollage (parties pondérales de matière sèche) | Résine B 74 Urée 13 Polyol 13 | Résine B 85 Urée 15 Polyol 0 |
| Densité (kg/m$^3$) | 15 | 15 |
| Taux liant (%) | 5,0 | 4,45 |
| Finesse fibres (F/5g) | 4,8 | 4,6 |
| Couleur | blanc | blanc |
| Résistance à la traction (gf/g) | | |
| . après fabrication . après vieillissement | 355 167 | 277 158 |

TABLEAU 2

| | Exemple 3 | Exemple 4 |
|---|---|---|
| Composition d'encollage (parties pondérales de matière sèche) | Résine B 80 Urée 10 Polyol 10 | Résine B 85 Urée 10 Polyol 5 |
| Densité (kg/m$^3$) | 6 | 6 |
| Taux liant (%) | 5,2 | 5,1 |
| Finesse fibres (F/5g) | 2,8 | 2,8 |
| Couleur | blanc | blanc |
| Résistance à la traction (gf/g) | | |
| . après fabrication . après vieillissement | 136 77 | 134 56 |
| Reprise d'épaisseur (%) | | |
| . après 24 heures . après 3 mois | 121,3 80,5 | 118,1 78,2 |

**Revendications**

1. Composition aqueuse basique d'encollage de fibres minérales d'isolation comportant d'une part une résine thermodurcissable, d'autre part un ou plusieurs composés d'encollage dont de l'urée, **caractérisée en ce qu'**elle comprend un composé d'encollage supplémentaire à base d'un composé polyméthylolé de fonctionnalité au moins égale à trois, répondant à la formule R-C (CH$_2$OH)$_3$ ou R-C(CH$_2$OH)$_2$-CH$_2$-O-CH$_2$-(CH$_2$OH)$_2$-C-R', avec R et R', identiques ou différents, représentant chacun un radical aliphatique hydrocarboné comportant ou non un groupe hydroxyle.

2. Composition d'encollage selon la revendication 1, **caractérisée en ce que** la résine thermodurcissable est une résine phénolique modifiée ou non par de l'urée.

3. Composition d'encollage selon la revendication 1, **caractérisée en ce que** la résine thermodurcissable est une résine aminoplaste.

4. Composition d'encollage selon l'une des revendications 1 à 3, **caractérisée en ce que** le polyol est choisi dans le groupe formé par le pentaérythritol, le dipentaérythritol, le triméthylolpropane et le ditriméthylolpropane.

5. Composition d'encollage selon l'une quelconque des revendications 1 à 4, **caractérisée en ce que** le polyol est utilisé en quantité de 3 à 15 parties pour 100 parties pondérales de matière sèche de résine, d'urée et de polyol.

6. Composition d'encollage conforme à la revendication 3, **caractérisée en ce que** la résine résulte de la réaction de condensation, en milieu bas que, de formaldéhyde, d'urée et de mélamine, en présence de polyol de fonctionnalité au moins égale à trois.

7. Composition d'encollage conforme à la revendication 6, **caractérisée en ce que** le polyol entrant dans la préparation de la résine est du type R-C(CH$_2$OH)$_3$ ou sa forme dimérique R-C(CH$_2$OH)$_2$ -CH$_2$-O-CH$_2$-(CH$_2$OH)$_2$-C-R' où R et R', identiques ou différents, représentent chacun un radical aliphatique hydrocarboné comportant ou non un groupe hydroxyle.

8. Composition d'encollage conforme à l'une des revendications 6 ou 7, **caractérisée en ce que** le polyol est choisi dans le groupe formé par le pentaérythritol, le di-pentaérythritol, le triméthylolpropane et le ditriméthylolpropane.

9. Composition d'encollage conforme à la revendication 3, **caractérisée en ce que** la résine résulte de la réaction de condensation, en milieu basique, de formaldéhyde, de mélamine puis d'urée, en l'absence de polyol.

10. Composition d'encollage conforme à l'une des revendications 6 à 9, **caractérisée en ce que** dans les résines thermodurcissables, les rapports molaires

$$\underline{F} \quad et \quad \underline{U}$$
$$M \qquad\quad M$$

du nombre de moles de formaldéhyde (F) et d'urée (U) rapporté au nombre de moles de mélamine (M) sont, pour

$$\underline{F}, \ de \ (0,5 \ \underline{U} + 1,5) \ \grave{a} \ (3 \ \underline{U} + 3) \ et, \ pour \ \underline{U}, \ de \ 0,5 \ \grave{a} \ 5.$$
$$M \qquad\qquad M \qquad\qquad\qquad M \qquad\qquad\qquad\qquad\qquad M$$

11. Composition d'encollage conforme à l'une quelconque des revendications 1 à 10, **caractérisée en ce qu'**elle contient, en parties pondérales de matière sèche, de 70 à 90 parties de résine et de 10 à 30 parties d'urée et de 3 à 15 parties de polyol.

**12.** Composition d'encollage conforme à l'une quelconque des revendications 1 à 11, **caractérisée en ce qu'**elle contient un ou plusieurs additifs d'encollage choisis dans le groupe formé par de l'huile, de l'ammoniaque un catalyseur de polymérisation de la résine et du silane.

**13.** Composition d'encollage conforme à l'une quelconque des revendications 1 à 12, **caractérisée en ce qu'**elle contient en outre au moins un colorant.

**14.** Composition d' encollage conforme à l'une quelconque des revendications 3 à 13, **caractérisée en ce qu'**elle contient en outre une résine phénolique modifiée ou non par de l'urée.

**15.** Procédé de fabrication de produits d'isolation à base de fibres minérales discontinues, consistant à former les fibres, à les traiter par une composition d'encollage contenant une résine thermodurcissable et à soumettre les fibres ainsi traitées à un traitement thermique pour polymériser la résine, **caractérisé en ce que** l'on traite les fibres par une composition d'encollage conforme à l'une quelconque des revendications 1 à 14.

**16.** Produit d'isolation à base de fibres minérales discontinues, **caractérisé en ce que** les fibres sont imprégnées d'une composition d'encollage conforme à l'une quelconque des revendications 1 à 14.

**17.** Produit d'isolation blanc à base de fibres minérales discontinues, **caractérisé en ce que** les fibres sont imprégnées d'une composition d'encollage conforme à l'une quelconque des revendications 3 à 12.

## Claims

**1.** Basic aqueous composition for gluing discontinuous mineral fibres, containing both a thermosetting resin, and one or a plurality of gluing compounds, including urea, characterised in that it comprises an additional gluing compound which is a polymethylolated compound of a functionality at least equal to three, in accordance with the formula $R\text{-}C(CH_2OH)_3$ or $R\text{-}C(CH_2OH)_2\text{-}CH_2\text{-}O\text{-}CH_2(CH_2OH)_2\text{-}C\text{-}R'$, in which R and R' may be identical or different, each representing an aliphatic hydrocarbon radical which may or need not comprise a hydroxyl group.

**2.** Gluing composition according to Claim 1, characterised in that the thermosetting resin is a phenolic resin which may or need not be modified by urea.

**3.** Gluing composition according to Claim 1, characterised in that the thermosetting resin is an aminoplastic resin.

**4.** Gluing composition according to any one of Claims 1 to 3, characterised in that the polyol is chosen from the group comprising pentaerythritol, dipentaerythritol, trimethylolpropane and ditrimethylolpropane.

**5.** Gluing composition according to any one of Claims 1 to 4, characterised in that the polyol is used in a quantity of 3 to 15 parts per 100 parts by weight of dry matter of resin, urea and polyol.

**6.** Gluing composition according to Claim 3, characterised in that the resin results from the reaction of condensation, in a basic medium, of formaldehyde, urea and melamine, in the presence of a polyol of a functionality at least equal to three.

**7.** Gluing composition according to Claim 6, characterised in that the polyol used to prepare the resin is of type $R\text{-}C(CH_2OH)_3$ or its dimeric form $R\text{-}C(CH_2OH)_2\text{-}CH_2\text{-}O\text{-}CH_2\text{-}(CH_2OH)_2C\text{-}R'$ in which R and R', which may be identical or different, each represents an aliphatic hydrocarbon radical which may or need not comprise a hydroxyl group.

**8.** Gluing composition according to either of Claims 6 or 7, characterised in that the polyol is chosen from the group comprising pentaerythritol, dipentaerythritol, trimethylolpropane and ditrimethylolpropane.

9

EP 0 305 249 B1

**9.** Gluing composition according to Claim 3, characterised in that the resin results from the reaction of condensation in a basic medium of formaldehyde, melamine and then urea, in the absence of polyol.

**10.** Gluing composition according to any one of Claims 6 to 9, characterised in that in the thermosetting resins the molar ratios

$$\underline{F} \text{ and } \underline{U}$$
$$\overline{M} \qquad \overline{M}$$

of the number of moles of formaldehyde (F) and of urea (U) relative to the number of moles of melamine (M) are, for

$$\underline{F}, \ (0.5 \ \underline{U} + 1.5) \text{ to } (3 \ \underline{U} + 3) \text{ and, for } \underline{U}, \ 0.5 \text{ to } 5.$$
$$\overline{M} \qquad \overline{M} \qquad \overline{M} \qquad \overline{M}$$

**11.** Gluing composition according to any one of Claims 1 to 10, characterised in that it contains, in parts by weight of dry matter, 70 to 90 parts resin and 10 to 30 parts urea and 3 to 15 parts polyol.

**12.** Gluing composition according to any one of Claims 1 to 11, characterised in that it contains one or more gluing additives chosen from the group consisting of oil, ammonia, and a catalyst for polymerising the resin and the silane.

**13.** Gluing composition according to any one of Claims 1 to 12, characterised in that it also contains at least one colouring agent.

**14.** Gluing composition according to any one of Claims 3 to 14, characterised in that it contains also a phenolic resin which may or need not be modified by urea.

**15.** Method of producing insulating products based on discontinuous mineral fibres, consisting of forming the fibres, treating them with a gluing composition containing a thermosetting resin, and subjecting the fibres thus treated to heat treatment in order to polymerise the resin, characterised in that the fibres are treated with a gluing composition according to any one of Claims 1 to 14.

**16.** Insulating product on a basis of discontinuous mineral fibres, characterised in that the fibres are impregnated with a gluing composition according to any one of Claims 1 to 14.

**17.** White insulating product on a basis of discontinuous mineral fibres, characterised in that the fibres are impregnated with a gluing composition according to any one of Claims 3 to 12.

**Patentansprüche**

**1.** Wäßrige basische Schlichtezusammensetzung für Mineralfasern für Dämmzwecke, die einerseits ein wärmeaushärtbares Harz und andererseits eine oder mehrere Schlichteverbindungen, darunter Harnstoff, beinhaltet, **dadurch gekennzeichnet, daß** sie eine zusätzliche Schlichteverbindung auf Basis einer polymethylolierten Verbindung mit einer Funktionalität von mindestens gleich 3 gemäß der Formel R-C (CH$_2$OH)$_3$ oder R-C(CH$_2$OH)$_2$-CH$_2$-O-CH$_2$-(CH$_2$OH)$_2$-C-R' beinhaltet, wobei R und R' identisch oder verschieden sind und jeweils ein aliphatisches Kohlenwasserstoffradikal darstellen, das eine Hydroxylgruppe umfassen kann.

**2.** Schlichtezusammensetzung nach Anspruch 1, **dadurch gekennzeichnet, daß** das wärmeaushärtbare Harz ein Phenolharz ist, das durch Harnstoff modifiziert sein kann.

**3.** Schlichtezusammensetzung nach Anspruch 1, **dadurch gekennzeichnet, daß** das wärmeaushärtbare Harz ein Aminoplastharz ist.

**4.** Schlichtezusammensetzung nach einem der Ansprüche 1 bis 3, **dadurch gekennzeichnet, daß** das Polyol aus der von Penta-Erythritol, Dipenta-Erythritol, Trimethylolpropan und Ditrimethylolpropan gebildeten Gruppe gewählt ist.

**5.** Schlichtezusammensetzung nach einem der Ansprüche 1 bis 4, **dadurch gekennzeichnet, daß** der Gewichtsanteil des verwendeten Polyols 3 bis 15% der Trockenmaterie von Harz, Harnstoff und Polyol beträgt.

**6.** Schlichtezusammensetzung nach Anspruch 3, **dadurch gekennzeichnet, daß** das Harz aus einer Kondensationsreaktion in basischem Milieu zwischen Formaldehyd, Harnstoff und Melamin in Gegenwart von Polyol mit einer Funktionalität von mindestens gleich 3 resultiert.

**7.** Schlichtezusammensetzung nach Anspruch 6, **dadurch gekennzeichnet, daß** das bei der Herstellung des Harzes verwendete Polyol vom Typ $R\text{-}C(CH_2OH)_3$ oder dessen dimerische Form $R\text{-}C(CH_2OH)_2\text{-}CH_2\text{-}O\text{-}CH_2\text{-}(CH_2OH)_2\text{-}C\text{-}R'$ ist, wobei R und R' entweder identisch oder verschieden sind und jeweils ein aliphatisches Kohlenwasserstoffradikal darstellen, das eine Hydroxylgruppe umfassen kann.

**8.** Schlichtezusammensetzung nach einem der Ansprüche 6 oder 7, **dadurch gekennzeichnet, daß** das Polyol aus der von Penta-Erythritol, Dipenta-Erythritol, Trimethylolpropan und Ditrimethylolpropan gebildeten Gruppe gewählt ist.

**9.** Schlichtezusammensetzung nach Anspruch 3, **dadurch gekennzeichnet, daß** das Harz aus der Kondensationsreaktion in basischem Milieu zwischen Formaldehyd, Melamin und Harnstoff in Abwesenheit von Polyol resultiert.

**10.** Schlichtezusammensetzung nach einem der Ansprüche 6 bis 9, **dadurch gekennzeichnet, daß** bei den wärmeaushärtbaren Harzen die Molverhältnisse $\frac{F}{M}$ und $\frac{U}{M}$ der Molzahlen von Formaldehyd (F) und von Harnstoff (U) bezogen auf die Molzahl von Melamin (M) für $\frac{F}{M}$ von $(0{,}5\frac{U}{M} + 1{,}5)$ bis $(3\frac{U}{M} + 3)$ und für $\frac{U}{M}$ von 0,5 bis 5 sind.

**11.** Schlichtezusammensetzung nach irgendeinem der Ansprüche 1 bis 10, **dadurch gekennzeichnet, daß** ihre Trockenmaterie einen Gewichtsanteil von 70 bis 90 % Harz, 10 bis 30 % Harnstoff und 3 bis 15 % Polyol umfaßt.

**12.** Schlichtezusammensetzung nach irgendeinem der Ansprüche 1 bis 11, **dadurch gekennzeichnet, daß** sie einen oder mehrere Schlichtenzusätze enthält, die aus der aus Öl, Ammoniak, einem Katalysator für die Polymerisation des Harzes, und Silan gebildeten Gruppe gewählt sind.

**13.** Schlichtezusammensetzung nach irgendeinem der Ansprüche 1 bis 12, **dadurch gekennzeichnet, daß** sie des weiteren zumindest einen Farbstoff enthält.

**14.** Schlichtezusammensetzung nach irgendeinem der Ansprüche 3 bis 13, **dadurch gekennzeichnet, daß** sie des weiteren ein Phenolharz enthält, das mit Harnstoff modifiziert sein kann.

**15.** Herstellungsverfahren für Dämmprodukte auf Basis von in begrenzter Länge vorliegenden Mineralfasern, welches darin besteht, die Fasern auszubilden, sie mit einer Schlichtezusammensetzung zu behandeln, welche ein wärmeaushärtbares Harz enthält, und die solchermaßen behandelten Fasern einer Wärmebehandlung zu unterziehen, um das Harz zu polymerisieren, **dadurch gekennzeichnet, daß** die Fasern mit einer Schlichtezusammensetzung nach irgendeinem der Ansprüche 1 bis 14 behandelt werden.

**16.** Dämmprodukt auf Basis von in begrenzter Länge vorliegenden Mineralfasern, **dadurch gekennzeichnet, daß** die Fasern mit einer Schlichtezusammensetzung nach irgendeinem der Ansprüche 1 bis 14 imprägniert sind.

17. Weißes Dämmprodukt auf Basis von in begrenzter Länge vorliegenden Mineralfasern, **dadurch gekennzeichnet, daß** die Fasern mit einer Schlichtezusammensetzung nach irgendeinem der Ansprüche 3 bis 12 imprägniert sind.